# EUROPEAN PATENT APPLICATION

(11) **EP 1 712 981 A1**
(43) Date of publication of application: **18.10.2006**
(21) Application number: 05008272.6
(22) Date of filing: 15.04.2005
(51) Int. Cl.: G06F 3/00

(54) **Interactive augmented reality system**

(71) Applicant: Bailey, Herman, 2200 Kobenhavn N (DK)
(72) Inventor: Bailey, Herman, 2200 Kobenhavn N (DK)
(74) Representative: van Walstijn, Bartholomeus G. G.

(57) **Abstract**

A system for generating augmented-reality environment with support for one or multiple users, the system including: one or more programmable interactive devices, such devices each being programmable to have one or more characteristics within a pre-defined hierarchy of interactive characteristics; and a virtual content generator; whereby the one or more programmable interactive devices each have a location ability for determining the respective spatial positioning of the respective programmable interactive device and a communication ability for communicating the respective spatial position to one or both of the virtual content generator and the respective programmable interactive devices.

## Description

### FIELD OF THE INVENTION

The present invention relates to devices, systems and/or methods for augmented reality environments with support for one or multiple users.

### BACKGROUND

Augmented reality (also referred to herein as AR) is a technology that enhances a person's view of the real world with virtual content such as imagery, text and virtual three dimensional (3D) objects. Existing virtual reality (VR) systems have only one single VR projection that all users, within their own relative space, are able to view. VR environments are typically fully immersive. With AR, each user has a unique view of the real environment that is overlaid with a spatially matched, personal augmented-reality view; this typically requires that users have their own head-mounted display (HMD). These aspects, amongst others, illustrate some of the critical differences between AR and virtual reality (VR).

### SUMMARY OF THE INVENTION

The present invention relates to devices, systems and/or methods for augmented-reality environments with support for multiple users; and, more specifically, to one or more apparatuses and/or methodologies for generating augmented-reality environment including one or more programmable interactive devices, such devices each being programmable to have one or more characteristics within a pre-defined hierarchy of interactive characteristics; and a virtual content generator; whereby the one or more programmable interactive devices each have a location ability for determining the respective spatial positioning of the respective programmable interactive device and a communication ability for communicating the respective spatial position to one or both of the virtual content generator and the respective programmable interactive devices.

Such devices, systems and/or methods will increase in efficiency as each approaches an optimal number of users. It will allow each one of a number of users to have a unique visual experience of the environment via their augmented-reality view, which is made up of what is directly visible within the users' respective field of view overlaid with images of the virtual environment content. The present invention is focused on what could be called a 'communal perception of virtual space'. For example, if a computer generated (CG) three dimensional box were located within an augmented-reality environment and all the participating users were asked to walk over and touch the box, then the intention would be that all the users would actually converge on the same physical point.

Also, the present invention is related to a specific form of Beacon device that is a component of the apparatus and incorporates aspects of the method.

According to a first aspect of the present invention apparatuses and/or methods are provided that will enable each of one or a plurality of users to have a spatially coherent augmented-reality view of the environment due to the displaying of computer generated (CG) content within each user's field of view in such a manner as to create the illusion of the CG content being physically located within the real environment, also to provide an embodiment of a Beacon process means, to be referred to as a Bee, that has aspects of the method incorporated into it. The Bee utilises apparatus and/or methodology to monitor its environment by independently measuring different phenomena. The data generated from this monitoring process is used in combination with other information to compute a reliable evaluation of the respective Bee's location. Events that occur in close proximity to a Bee will inherently yield the highest levels of precision and efficiency; the lowest level of precision and efficiency will occur for events that are at a significant distance from the Bee. The overall performance of an individual Bee will improve as a direct function of the number of error reduction procedures that it is able to execute simultaneously with other Bees. This improvement in performance will continue to increase up to an optimal number Bees, where an optimal relative efficiency will be achieved.

The further away an object gets form a user, the more difficult is it is for the individual to judge the precise location of the object. This present invention builds on this observation by having a system that is built up of a number of methods, each method generating an independent database to be used in the error reduction procedures.

In accordance with the present invention, one or more instances of the Bee will be directly connected to an instance of a duplex communication interface (CI) in such a manner that they maintain the same relative position; a first storage unit for storing information pertaining to the location of the Bees within the environment; a tracking method for retrieving information pertaining to the specific location of the pertinent user sensory organs that allow the user to experience the combined output of the apparatus via the communication interface; a second storage unit for storing the information pertaining to the location of the pertinent user sensory organs; a virtual content generation unit for generating content, whose attributes such as size, position, orientation are based on information retrieved from the said first and second storage units; a third storage unit for receiving and storing the relevant data pertaining to the virtual content and building a database of how these images will be viewed from the geographic position, roll, yaw and pitch of the plurality of communication interfaces; a wireless communication system for sending and receiving data; a compositing unit for blending the virtual images with the user's view of the real environment by making use of certain components from the databases held within the first, second and third storage means to create an augmented-reality that is displayed on their respective communication interfaces; and a user interface for presenting the output from the CI in a format that can be understood and experienced by the user.

### BRIEF DESCRIPTION OF THE DRAWINGS

Other aspects of the invention will become apparent from the following description of various embodiments and implementations with reference to the accompanying drawings, in which:
Fig. 1 is an exemplar flow chart illustrating structure and/or methods in accordance with the present invention for furnishing augmented-reality.
Fig. 2 is a legend illustrating features of an embodiment in accordance with the present invention of the function of a Bee.
Fig. 2A is a legend illustrating features of an embodiment in accordance with the present invention of the function of a Bee.
Fig. 2B is a legend illustrating features of an embodiment in accordance with the present invention of the function of a Bee.
Fig. 2C is a legend illustrating features of an embodiment in accordance with the present invention of the function of a Bee.
Fig. 2D is a legend illustrating features of an embodiment in accordance with the present invention of the function of a Bee.
Fig. 2E is a legend illustrating features of an embodiment in accordance with the present invention of the function of a Bee.
Fig. 2F is a legend illustrating features of an embodiment in accordance with the present invention of the function of a Bee.
Fig. 2G is a legend illustrating features of an embodiment in accordance with the present invention of the function of a Bee.
Fig. 3 is a block diagram illustrating the primary features of a Bee and its relationship to its immediate environment.
Fig. 4A is a block diagram illustrating an implementation of an apparatus and a method in accordance with the present invention.
Fig. 4B is a further block diagram illustrating an implementation of an apparatus and method in accordance with the present invention.
Fig. 4C is a schematic illustration of an implementation in accordance with the present invention.
Fig. 4D is a schematic illustration of an implementation in accordance with the present invention.
Fig. 5A is a block diagram of an implementation of an apparatus and method in accordance with the present invention.
Fig. 5B is a block diagram of procedural events relating to an implementation of an apparatus and method in accordance with the present invention.
Fig. 5C is a schematic illustration of an implementation in accordance with the present invention.
Fig. 5D is another schematic illustration of an implementation in accordance with the present invention.
Fig. 5E is yet another schematic illustration of an implementation in accordance with the present invention.
Fig. 6A is a block diagram of another implementation of an apparatus and method in accordance with the present invention.
Fig. 6B is a further block diagram of procedural events relating to the implementation of Fig. 6A.
Fig. 6C is a schematic illustration of an implementation in accordance with Figs. 6A and 6B.
Fig. 6D is a schematic plan illustration of the implementation of Figs. 6A, 6B and 6C.
Fig. 6E is a schematic plan illustration as in Fig. 6D with the units moved therein.
Fig. 6F is a further schematic plan illustration as in Figs. 6D and 6E with the units moved still further therein.
Fig. 7A is a block diagram illustration of an alternative apparatus and method implementation in accordance with the present invention.
Fig. 7B is a further block diagram illustrating procedural events relating to the implementation of Fig. 7A.
Fig. 7C is a schematic isometric illustration of the implementation of Figs. 7A and 7B.
Fig. 7D is a further schematic illustration of the implementation of Figs. 7A, 7B and 7C.
Fig. 7E is an alternative schematic illustration of the implementation of Figs. 7A, 7B and 7C.
Fig. 7F is a further schematic illustration as in Fig. 7E.
Fig. 7G is a still further schematic illustration as in Figs. 7E and 7F.

### DETAILED DESCRIPTION

In order to ease the following description, some of the terms hereof will first be described in relation to their adopted usage herein. First note the methods and apparatuses hereof are described by analogous relation to bees, bee hives and swarms of bees. Indeed, various distinctive forms or types of bees will be used for their distinctive characteristics to symbolize different entities and/or activities herein. Thus also, the term to be used herein for a generic, standard or base-level entity according hereto will be a Bee. Please note that a naming analogy based on the social hierarchy of bees such as honeybees is being used to help illustrate the hierarchical relationship of the features hereof; this analogy is in no way intended to restrict possible embodiments of the present invention but is for illustrative purposes only; moreover, this list is not exhaustive.

Thus, a Pupa will be used to describe apparatus and/or methodology that has the ability to control one or more additional compatible apparatuses to enable each such additional apparatus to discern its own spatial position as well as search for, locate and respond to, other similar entities. Similarly, a Drone will be used to describe apparatus and/or methodology that has the ability to be controlled by a Pupa and execute such methodology in such a manner as to search for, and respond to, other similar entities. Furthermore, a Worker will be used to describe apparatus and/or methodology that possesses a unique identifier that allows each such Worker to be distinguished from other similar Workers. Additionally, a Queen Bee is a Bee which has distinctive identifier of a Worker, but also has the ability to administer and control other Bees via a communication function that facilitates duplex remote control of other Workers.

A Hive will be used herein to describe a plurality of Bees that have been grouped together. The formation of the Hive will be the result of either an explicit process initiated by an external entity or a spontaneous process initiated by one or more Bees. A Swarm will be used to describe a group of hives, which are actively in communication with each other. The communication may be facilitated by platform independent protocols such as TCP/IP (this is not an exhaustive list). The formation of a Swarm will either be; an explicit process initiated by an external entity, or a spontaneous process initiated by at least one Hive.

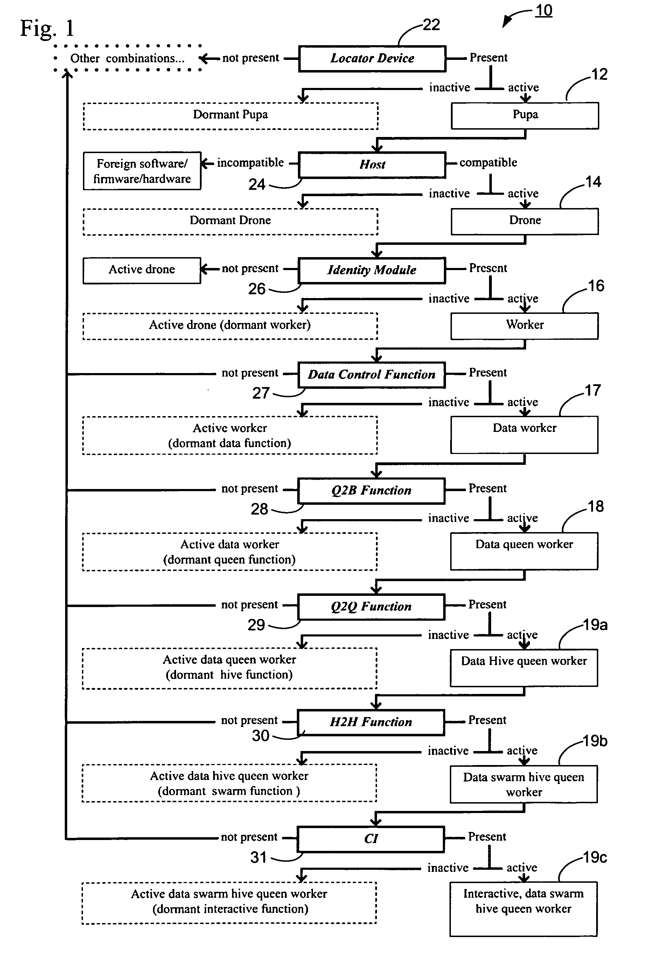

These Bee functional categories are shown in Fig. 1 in a hierarchical structure 10 which shows the building distinctions between the various Bee categories. First shown is the Pupa 12 which has as a minimum a capability of a Locator Device 22 (described further below). Then, the Drone 14 has the same Locator Device capability with the additional Host 24 capability (see below). A Worker 16 then has both of those capabilities with the addition of an Identity Module 26 providing an identification capability. The next logical Bee structure in the hierarchy is the Queen Bee 18 with the capabilities of the Worker (and Drone and Pupa) but with the addition of Queen to Bee (Q2B) functionality 28. Here, however, an additional layer of Bee structure is added with a Data Worker Bee 17 inserted between the standard Worker 16 and the Queen 18. The so-called Data Worker Bee 17 has the additional Data Control functionality 27 shown in Fig. 1. Similarly, several levels of Queen Bee functionalities are added here, namely, those of the Data Hive Queen 19a, the Data Swarm Hive Queen 19b and the Interactive Data Swarm Hive Queen 19c. Each of these has a respectively additional layer of functionality the Data Hive Queen 19a having the additional Queen to Queen (Q2Q) communication functionality 29, the Data Swarm Hive Queen 19b having the further additional Hive to Hive (H2H) communication functionality 30, and the Interactive Data Swarm Hive Queen 19c having the Communication Interface (CI) ability 31 (described further below).

The flowchart of Fig. 1 thus illustrates the analogous Bee naming process for the various categories/combinations of bees, as well as the functionality and/or apparatus used here. This illustration can be viewed as focusing on a series of sequential questions regarding the presence of the features for determination of the characteristics of a particular Bee.

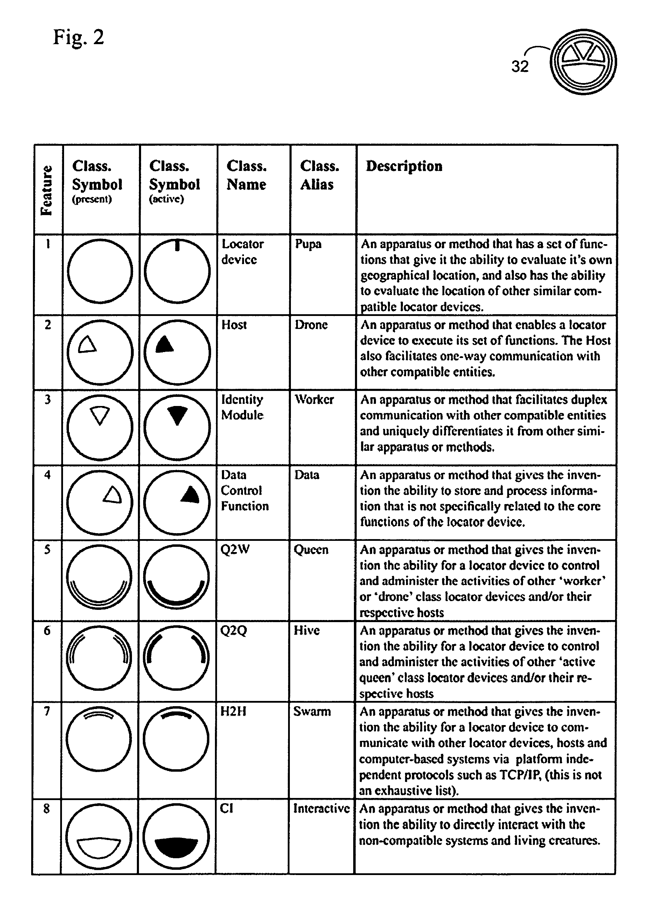

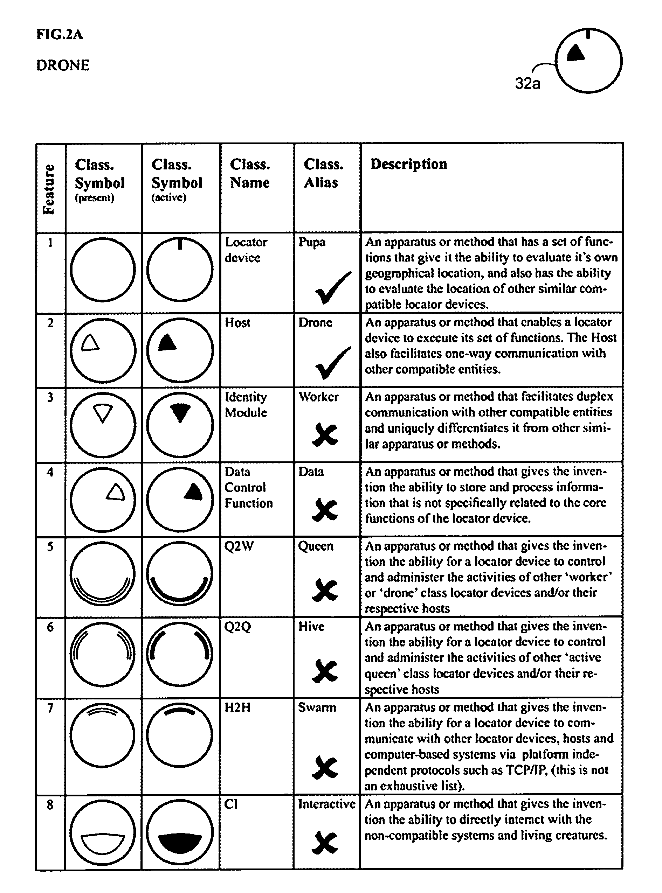

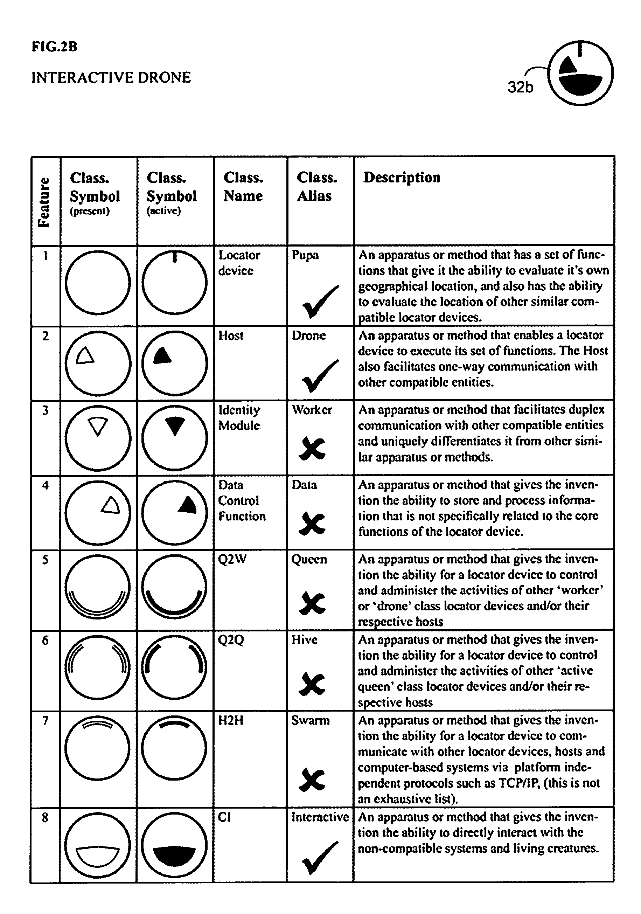

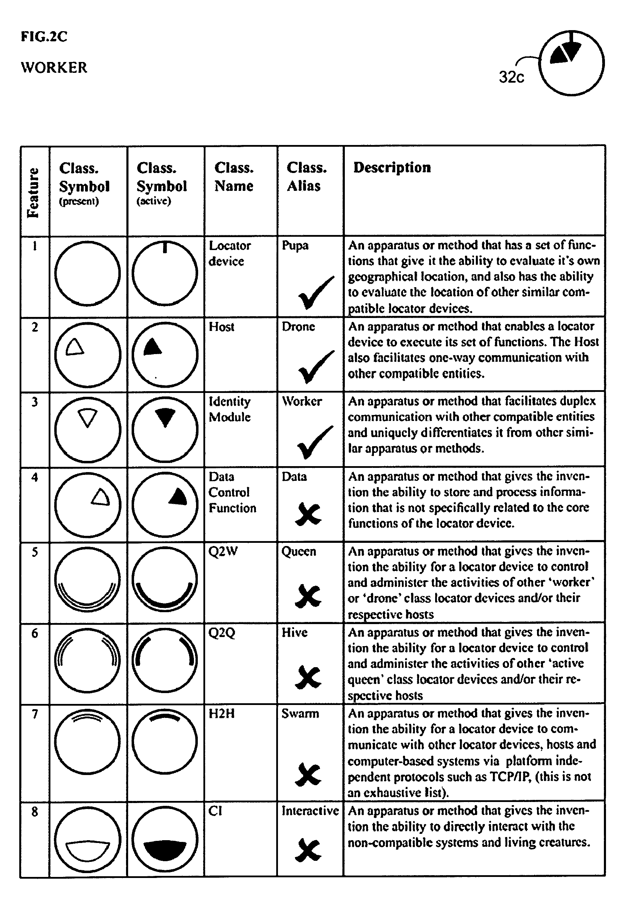

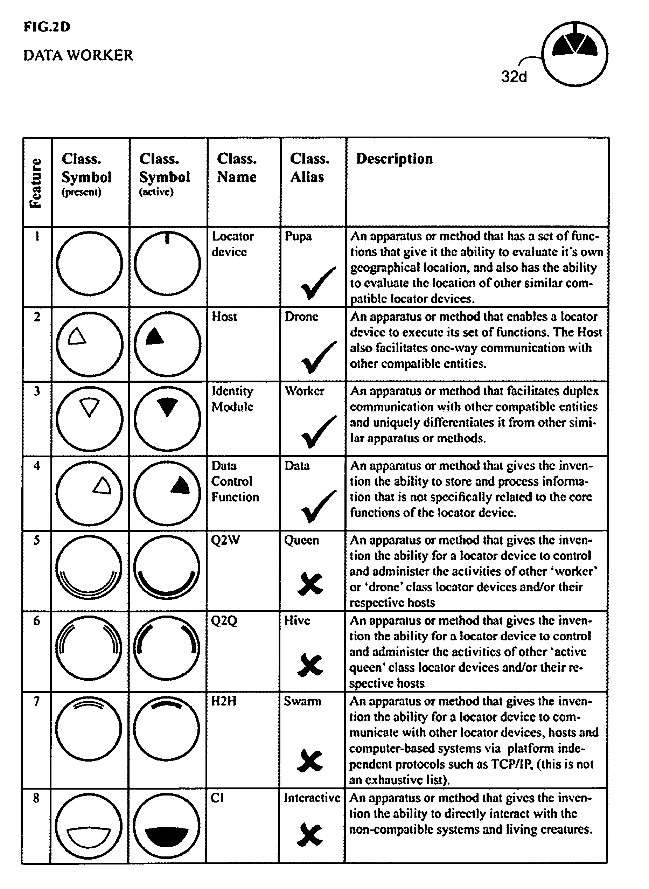

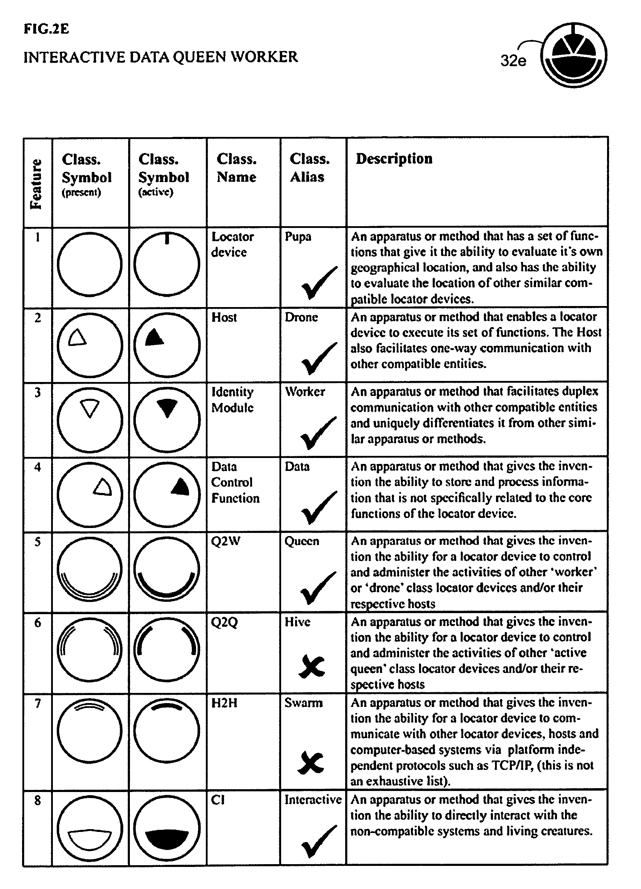

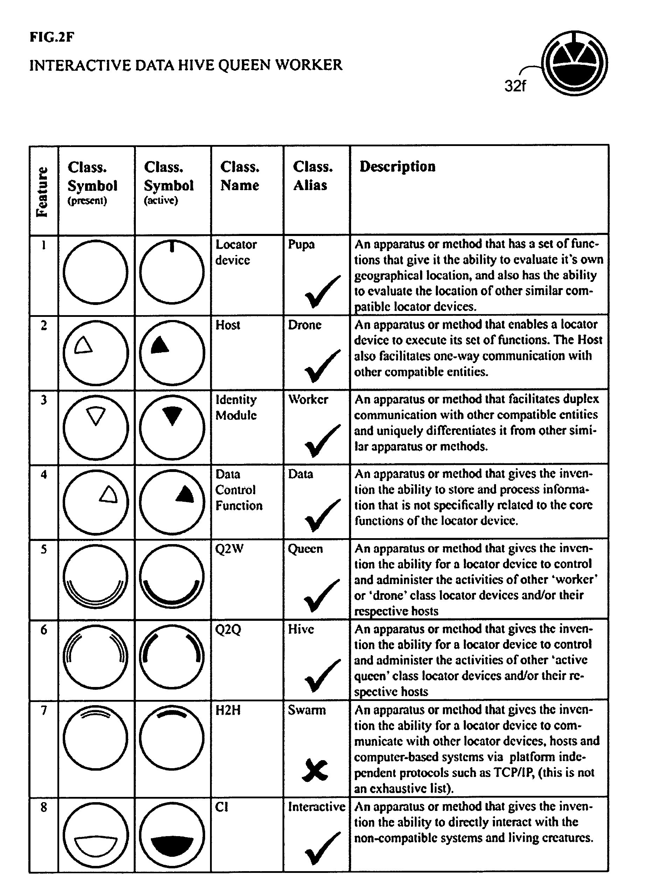

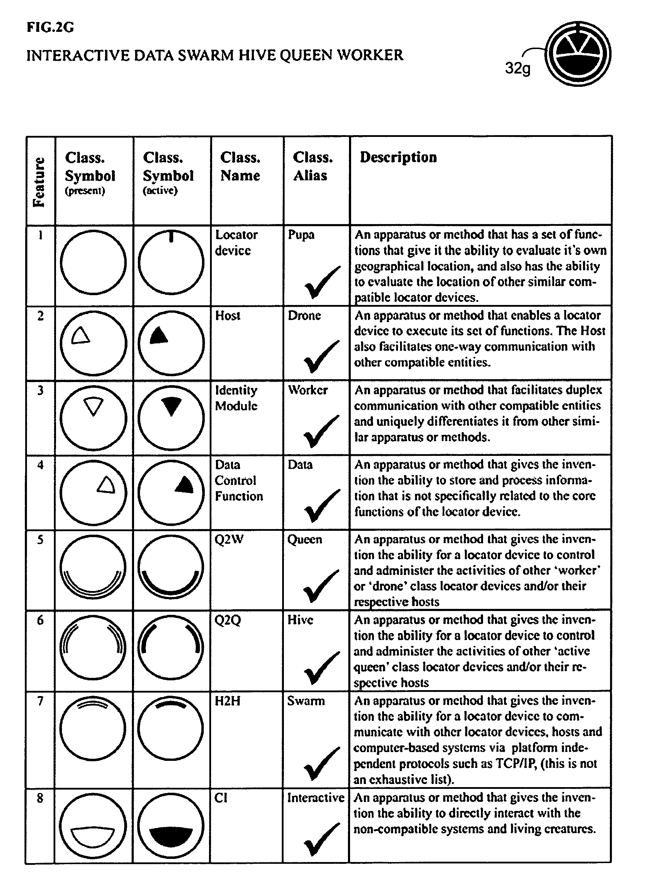

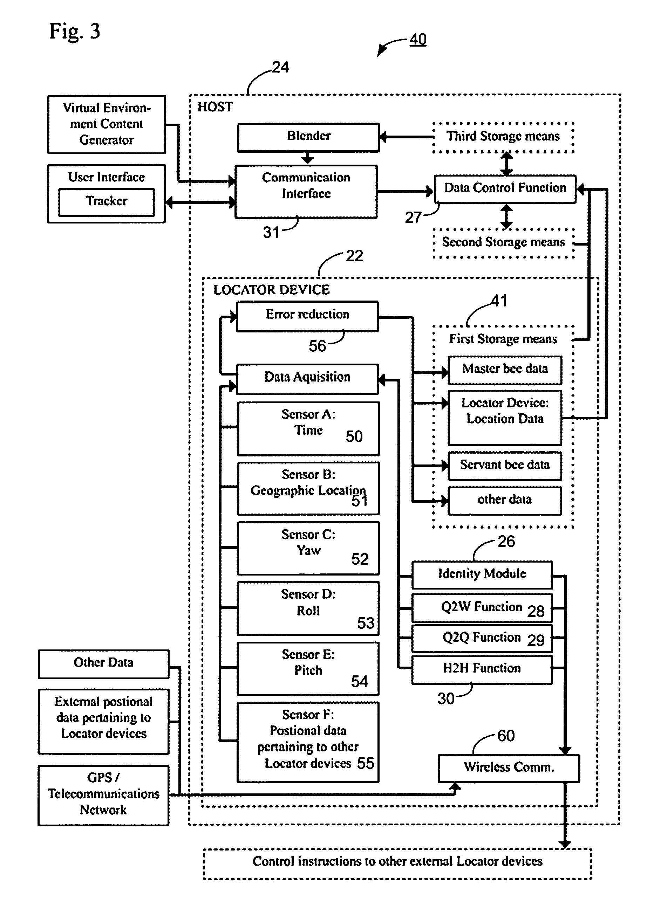

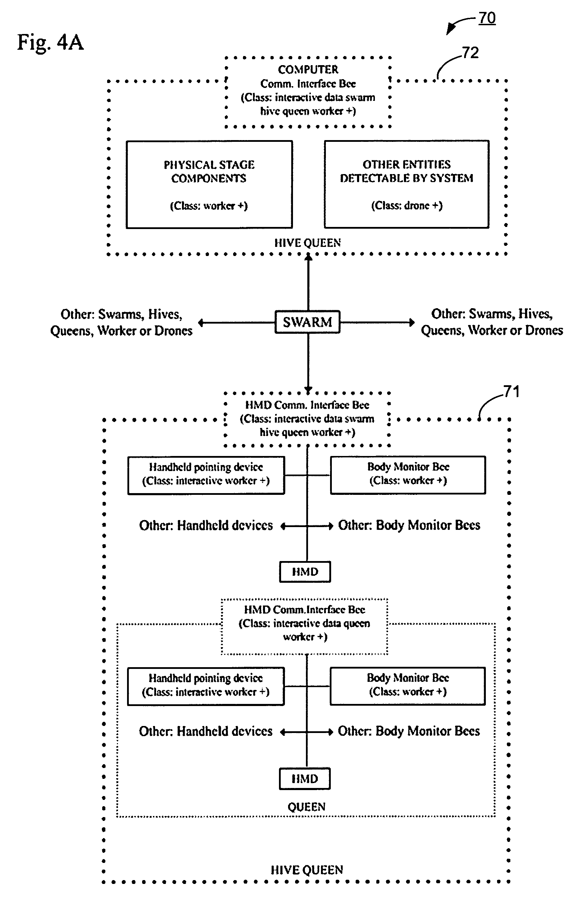

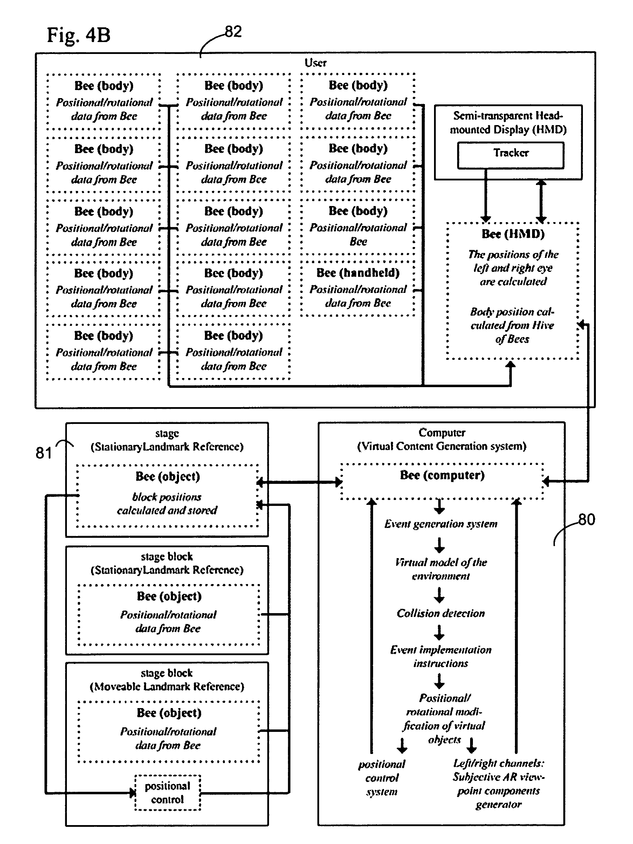

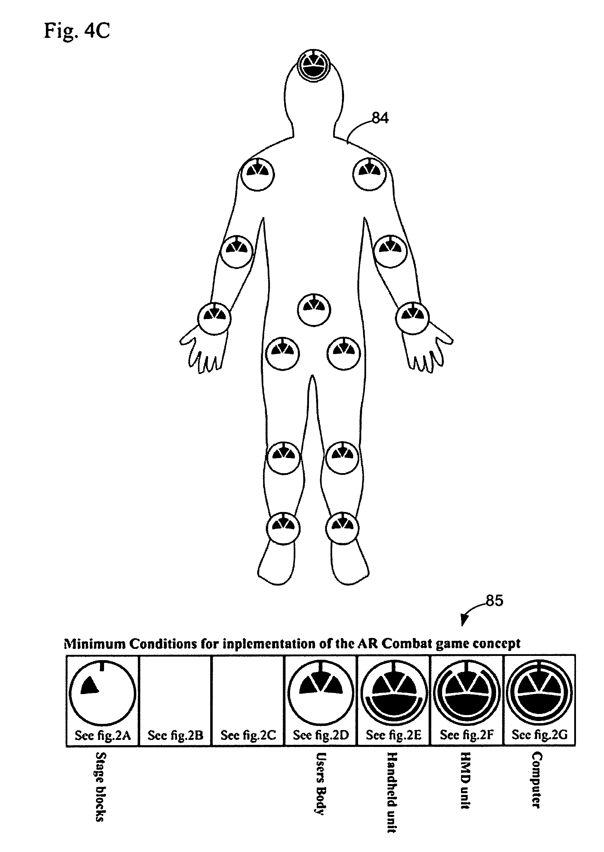

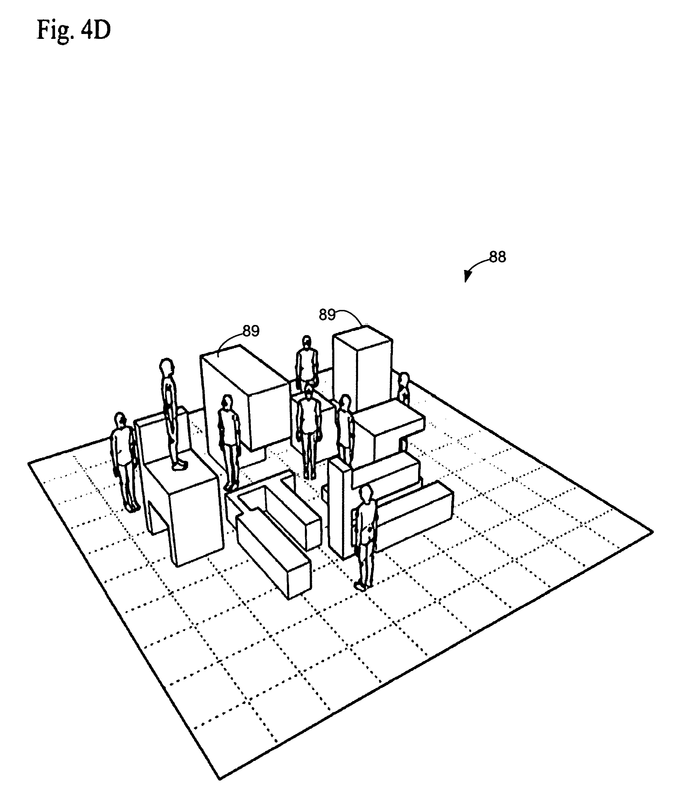

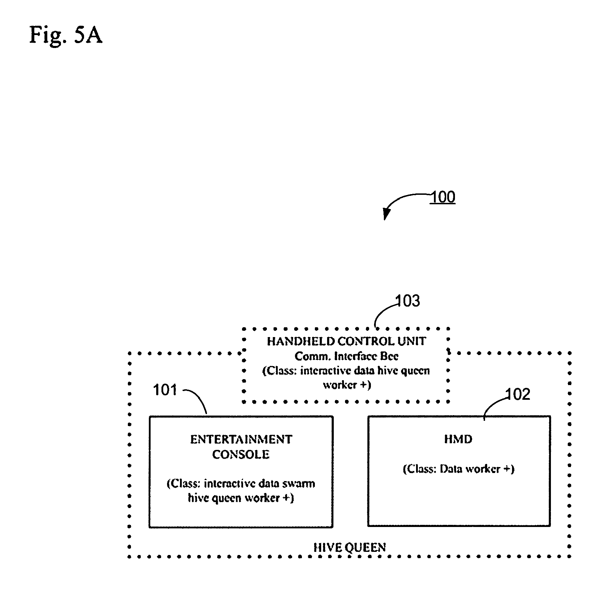

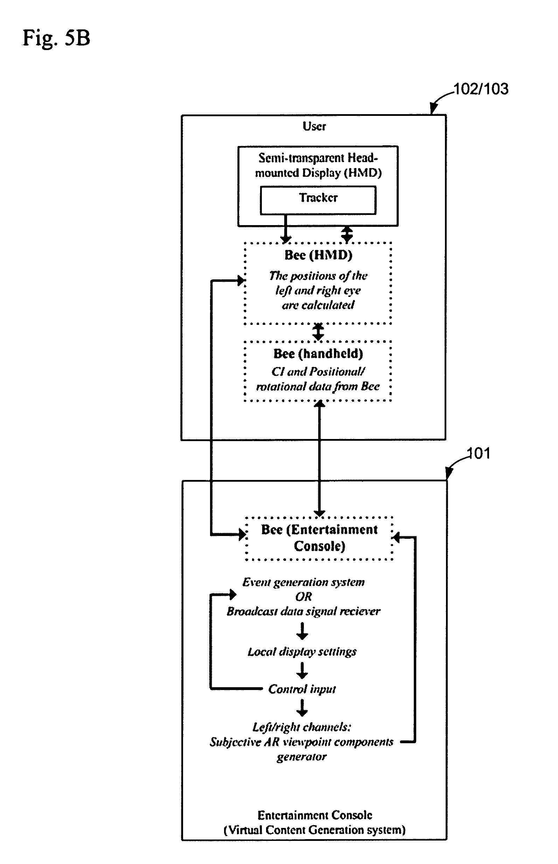

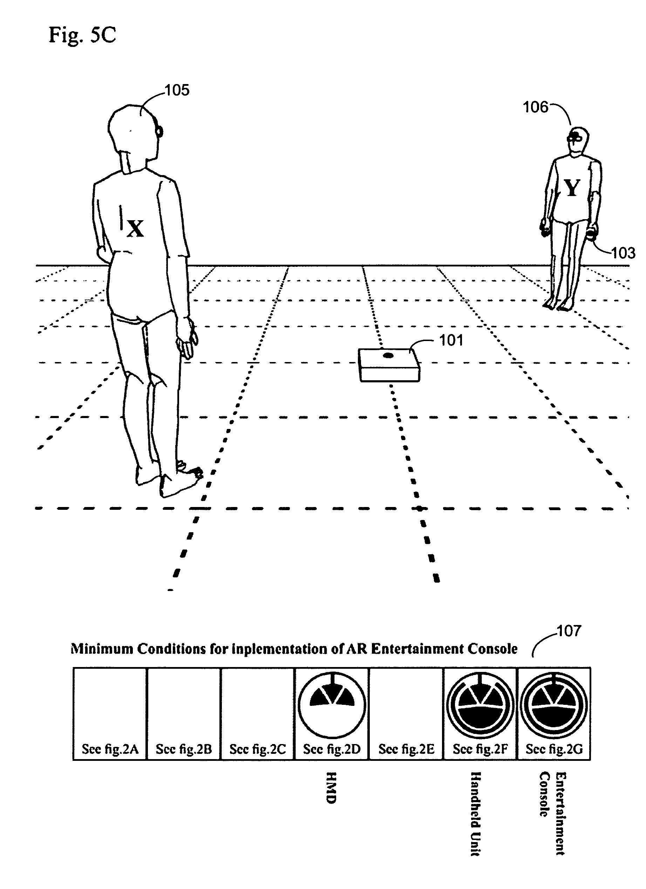

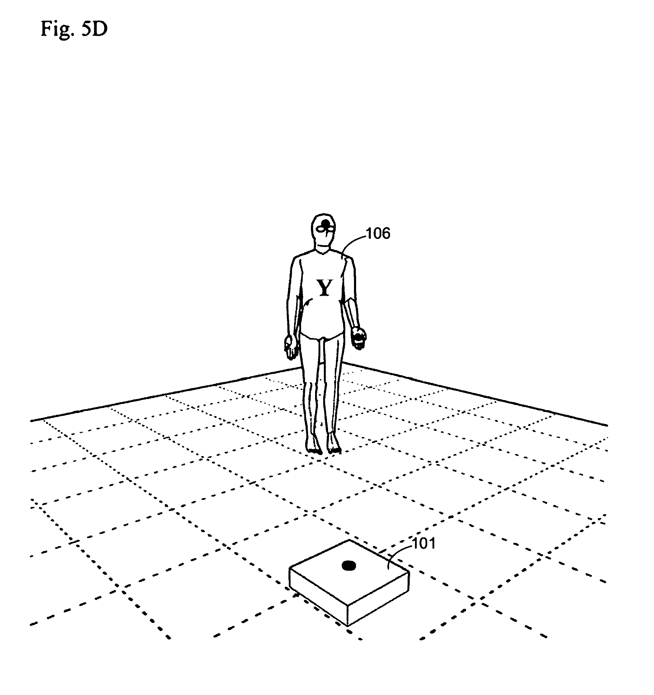

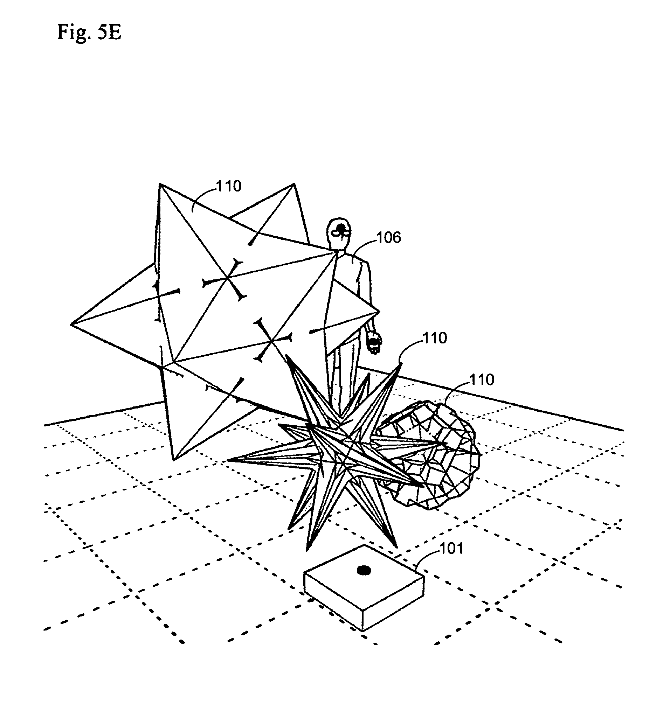

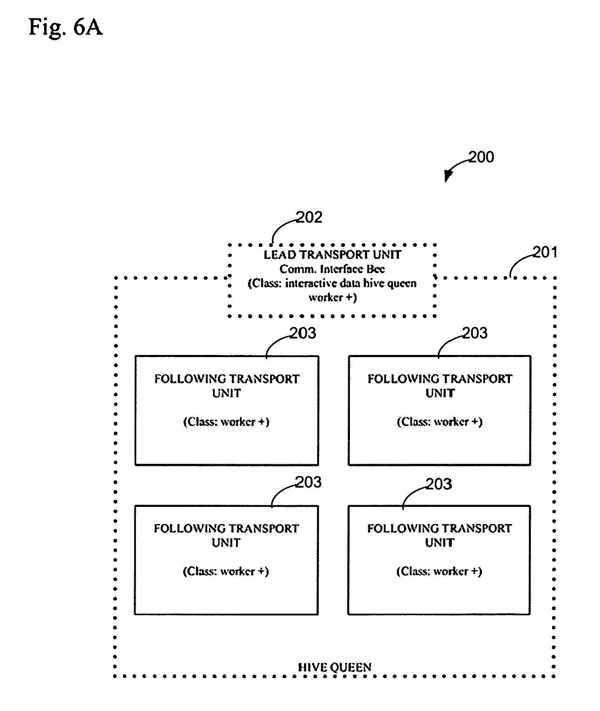

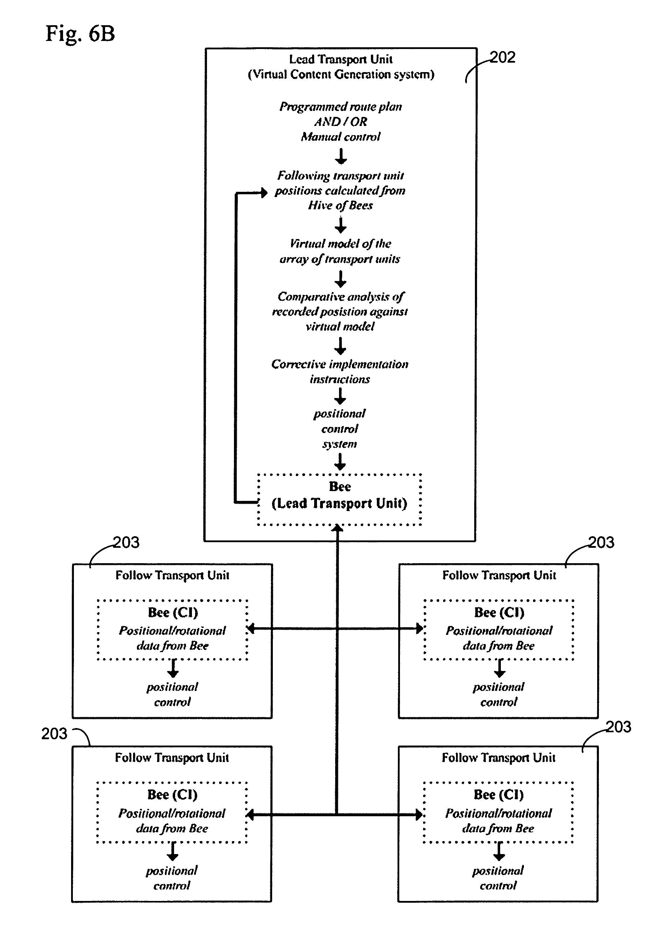

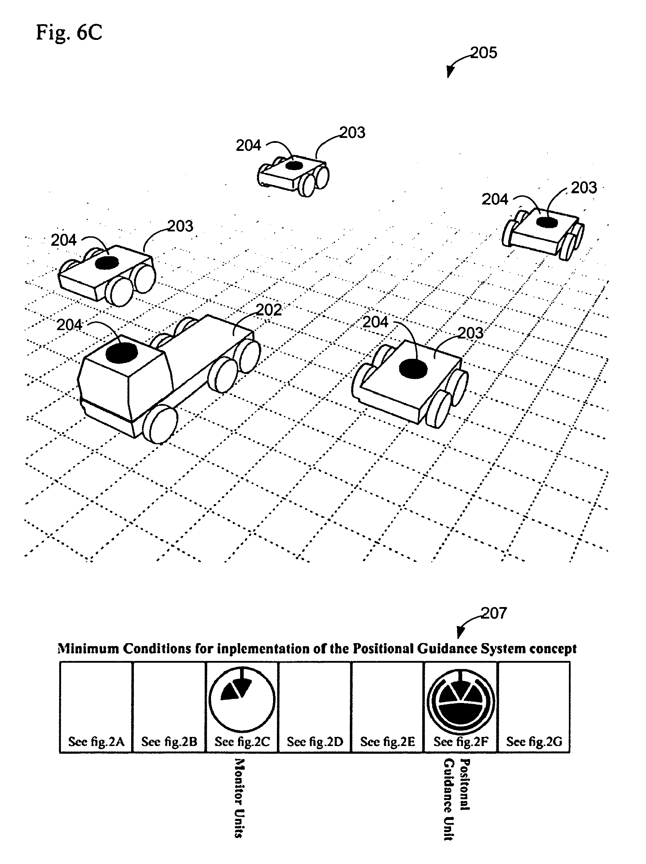

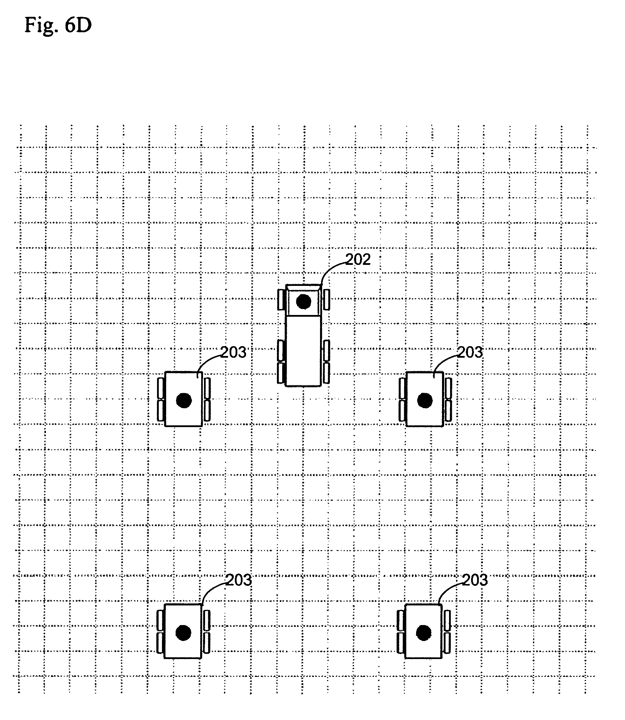

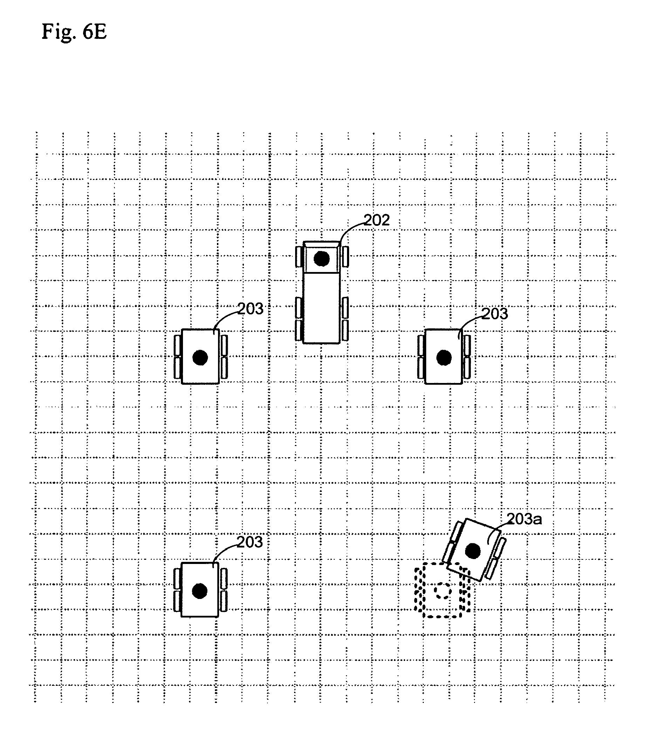

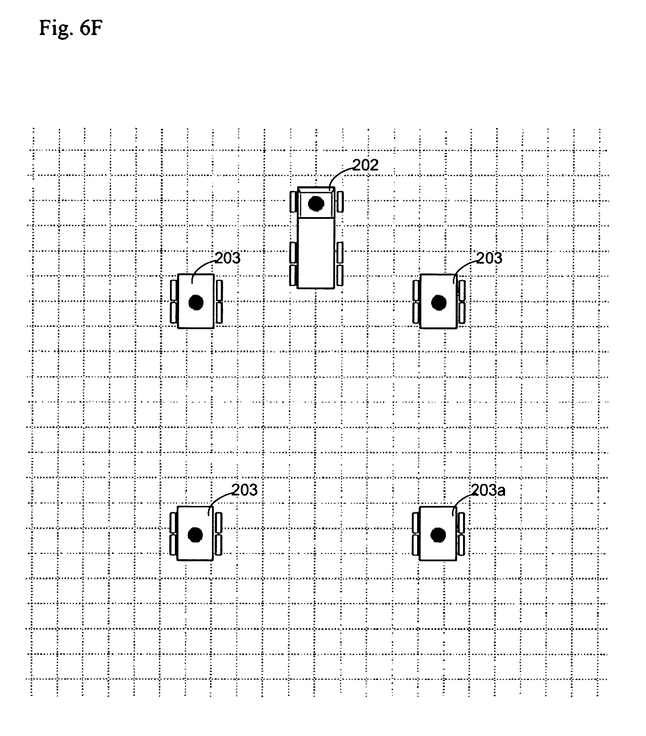

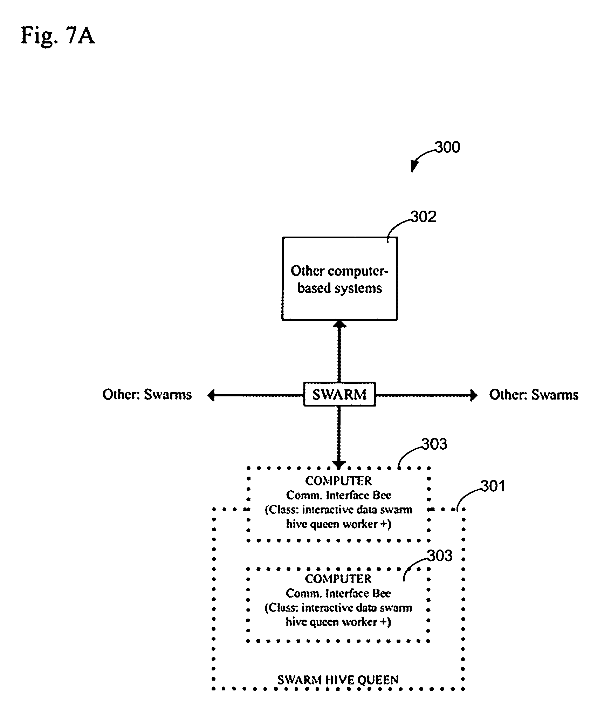

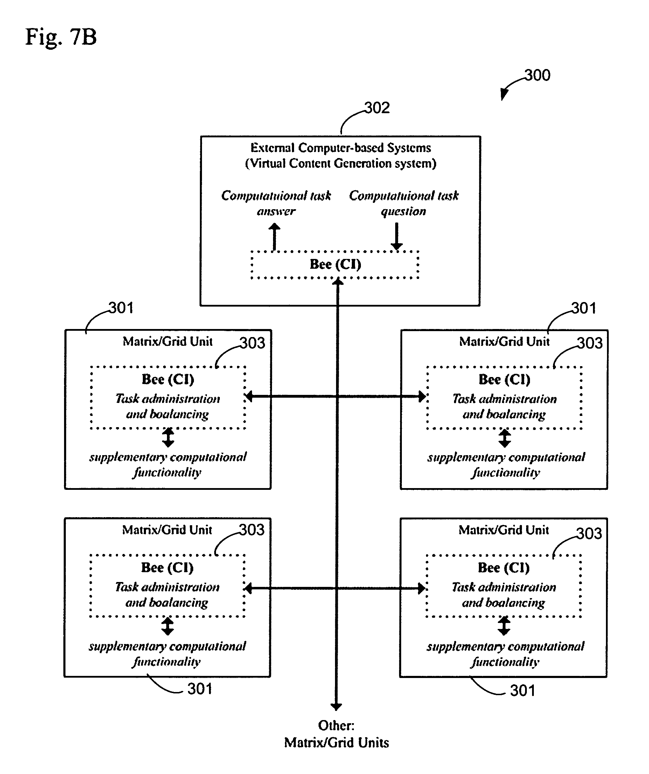

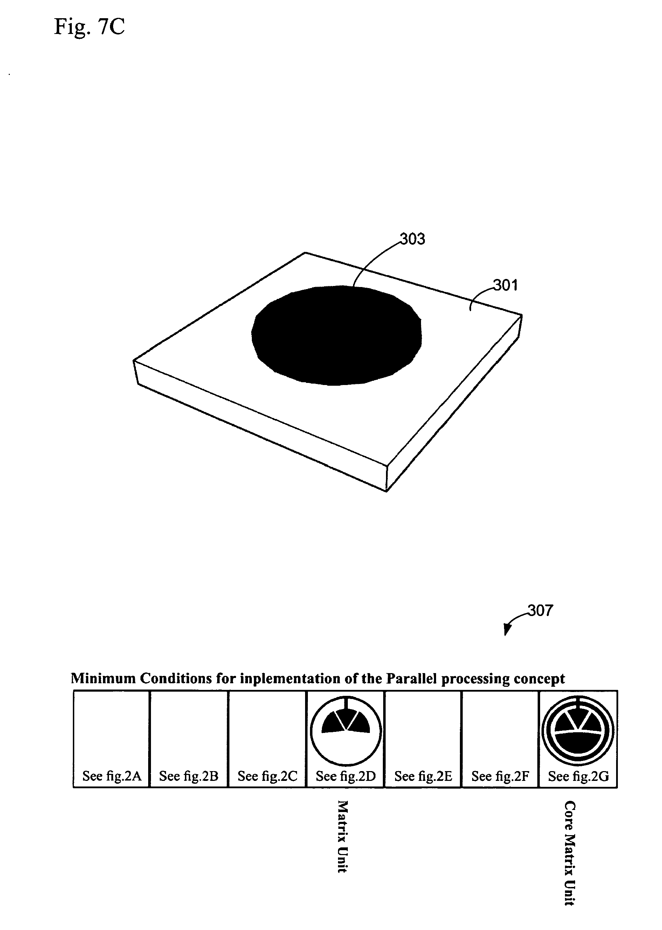

In a preferred implementation hereof, every Bee is defined by a device/apparatus (see e.g., device 40 of Fig. 3 described in further detail below) which is programmable or otherwise to have the characteristics of any and/or every different kind of Bee. Then, in any particular usage the device/apparatus may be programmed to be either a Pupa, a Drone, a Worker or a Queen with any of the particular capabilities described herein or otherwise alternatively useful herewith. In some such implementations, the device/apparatus may be or at least include a Locator Device 22 which has a means for communicating to other Locator Devices 22 (and/or other receiving devices, see description below). For this communication, the locator device may have or otherwise be associated with a host 24 (see Fig. 3) and/or with a beacon 32 (not shown in Fig. 3, but see Fig. 2). Thus, Fig. 1 can also be referred to as a flowchart that demonstrates the primary features of a Bee 40 involving minimally a Locator Device 22 and/or a host 24 and/or a Beacon 32 (see Fig 2) used therewith/thereon. This illustration presents a series of data regarding the presence of the features of any particular Bee where indeed each feature is ultimately in fact present, even if not programmed to be shown during any particular usage. An exemplar means for communicating such information by Beacon 32 is shown listed in FIG. 2, et al. (e.g., Figs. 2A - 2G).

In particular, FIG. 2, FIG. 2A, FIG. 2B, FIG. 2C, FIG. 2D, FIG. 2E, FIG. 2F, FIG. 2G are examples of tables of the features of a Beacon 32 hereof. Each feature is assumed to be physically capable of being shown. The question is then asked as to whether or not the feature is active or inactive based upon the programmed usage at any particular time. Based on the various programmed distinctions, a corresponding illustration of the ultimate classification symbol for each different type of Bee is depicted in the top right-hand corner of the respective FIGs. 2A, 2B, 2C, 2D, 2E, 2F, and 2G.

In particular, FIG.2A is an example that includes the primary features of an analogously named 'Drone' version of the Beacon 32a wherein the LOCATOR DEVICE is active indicating the PUPA capability and the LOCATOR DEVICE has a compatible host: thus, the DRONE capability is shown.

Similarly, FIG.2B is an example that includes the primary features of an analogously named 'Interactive Drone' version of the Beacon 32b wherein the LOCATOR DEVICE is active:- PUPA; and, the LOCATOR DEVICE has a compatible host:- DRONE; and, also, since the Drone has the communication interface (CI) indicated by the Beacon 32b, then this is an INTERACTIVE DRONE as shown by the Beacon 32b.

FIG.2C is an example that includes the primary features of an analogously named 'Worker' version of the Beacon 32c wherein LOCATOR DEVICE is active:- PUPA; the LOCATOR DEVICE has a compatible host:- DRONE; and the DRONE has the identity module:- WORKER is therefore the shown capability by the Beacon 32c.

FIG.2D is an example that includes the primary features of an analogously named 'Data Worker' version of the Beacon 32d wherein the LOCATOR DEVICE is active:- PUPA; the LOCATOR DEVICE has a compatible host:- DRONE; the DRONE has the identity module:- WORKER; and the WORKER has the data control function:- DATA WORKER is the shown implementation by Beacon 32d.

Similarly, FIG.2E is an example of that includes the primary features of an analogously named 'Interactive Data Queen Worker' version of the Beacon 32e wherein the LOCATOR DEVICE is active:- PUPA; the LOCATOR DEVICE has a compatible host:-DRONE; the DRONE has the identity module:- WORKER; the WORKER has the data control function:- DATA WORKER; the WORKER has the Q2W function:- DATA QUEEN WORKER; and the QUEEN WORKER has the communication interface (CI):- INTERACTIVE DATA QUEEN WORKER.

FIG.2F is an example that includes the primary features of an analogously named 'Interactive Data Hive Queen Worker' version of the Beacon 32f wherein the LOCATOR DEVICE is active:- PUPA; the LOCATOR DEVICE has a compatible host:- DRONE; the DRONE has the identity module:- WORKER; the WORKER has the data control function:- DATA WORKER; the WORKER has the Q2W function:- DATA QUEEN WORKER; the WORKER QUEEN has the Q2Q function:- DATA HIVE QUEEN WORKER; and the WORKER QUEEN has the communication interface (CI):- INTERACTIVE DATA HIVE QUEEN WORKER.

And, FIG.2G is an example that includes the primary features of an analogously named 'Interactive Data Swarm Hive Queen Worker' version of the Beacon 32g wherein the LOCATOR DEVICE is active:- PUPA; the LOCATOR DEVICE has a compatible host:-DRONE; the DRONE has the identity module:- WORKER; the WORKER has the data control function:- DATA WORKER; the WORKER has the Q2W function:- DATA QUEEN WORKER; the WORKER has the Q2Q function:- DATA HIVE QUEEN WORKER; the WORKER has the H2H function:- DATA SWARM HIVE QUEEN WORKER; and the WORKER has the communication interface (CI):- INTERACTIVE DATA SWARM HIVE QUEEN WORKER.

In addition to the combinations that are illustrated in FIG.1, FIG.2, and FIGs. 2A, 2B, 2C, 2D, 2E, 2F, 2G, there are a number of other possible combinations that can be described as follows. If the total number of features that are presented in accordance with an embodiment of the present invention equals 'alpha' (= α), and 'alpha' is greater than or equal to one (α ≥ 1), then 'Other combinations' equals two to the power 'alpha' minus one (= 2^{α}- 1). For each of the features that are present within each of the combinations, they will have the possibility of either being active or inactive.

The various devices and/or methodologies introduced in Figs 1 and 2 will now be described in further detail.

First, the Locator Device 22 is a device which provides the functions that are built into the core that is referred to as a Pupa 12. These functions include the ability to compute the device's own location geographically. It has the ability to compute its location in relation to other similar Locator Devices. In addition to this, the Locator Device is able to initiate one-way communication with other compatible entities. If the Locator Device is present, it has two principle states: active or inactive. If the Locator Device is in the active state, the cumulative description of all the previously defined features including this one, is a 'Pupa'. If the Locator Device is in the inactive state, the cumulative description of all the previously defined features excluding this one, would be a 'dormant Pupa'.

Next is the Host 24 which provides to the Locator Device the ability to execute its functions via a conduit entity referred to as a Host. The Host 24 facilitates one-way communication with other compatible Hosts that are able to receive such a transmission. As with the other devices/methodologies hereof, if the Host is present, it has two principle states: active or inactive. If the Host is in the active state, the cumulative description of all the previously defined features including this one is a 'Drone'. If the Host is in the inactive state, the cumulative description of all the previously defined features excluding this one is a 'dormant Drone'.

Similarly, a unique Identity Module 26 provides to the Locator Device 22 the ability to have duplex communication with other compatible embodiments of an apparatus and methodology hereof. This Identity Module 26 may be a number which may be permanently allocated to the Locator device and is, when specified, accessible to all computational functions carried out by the apparatus or methods. If the Identity Module is present, it has two principle states: active or inactive. If the Identity Module is in the active state, the cumulative description of all the previously defined features including this one is a 'Worker'. If the Identity Module is in the inactive state, the cumulative description of all the previously defined features excluding this one, is a 'Drone' with a dormant worker function.

A Data control function 27 may be included to provide the Locator device 22 with the ability to handle computational procedures and data storage that is not directly related to the determination of its own location by having the ability to administer and control compatible external entities. These external entities may include data processor chips and data storage devices although this list is not exhaustive. If the data control function is present, it has two principle states: active or inactive. If the data control function is in the active state, the cumulative description of all the previously defined features including this one is a 'Data Worker'. If the data control function is in the inactive state, the cumulative description of all the previously defined features excluding this one is a 'Worker' with a dormant data control function.

Further, the Queen-to-Bee Function (Q2B) 28 (sometimes also referred to as a Queen to Worker (Q2W) function) may provide the Locator Device 22 with the ability to administer and control other Bees via a communication function that facilitates duplex remote control of other Workers. If the Q2B function is present, it has two principle states: active or inactive. If the Q2B function is in the active state, the cumulative description of all the previously defined features including this one, would be a 'Data Queen Worker'. If the Q2B function is in the inactive state, the cumulative description of all the previously defined features excluding this one would be a 'Data Worker' with a dormant Q2B function.

The Queen-to-Queen Function (Q2Q) 29 may provide to the Locator Device 22 the ability to administer and control other queens via a communication function that facilitates duplex remote control of other apparatus that has a functioning implementation of the Queen-to-Bee function. If the Q2Q is present, it has two principle states: active or inactive. If the Q2Q function is in the active state, the cumulative description of all the previously defined features including this one would be a 'Data Hive Queen Worker'. If the Q2Q function is in the inactive state, the cumulative description of all the previously defined features excluding this one is a 'Data Queen Worker' with a dormant Q2Q function.

A Hive-to-Hive Function (H2H) 30 can provide to the Locator Device 22 the ability to communicate and negotiate the communal use of combined resources with other Hive Queens via a communication function that facilitates duplex communication with other apparatus that have an active Queen-to-Queen function. A plurality of Hives that are actively in communication with each other is referred to as a Swarm. In addition to this, this function also facilitates communication with other specified data-processing entities and digital environments. These entities may include data processing devices such as computers, although this list is not exhaustive. Digital environments may include the Internet and a number of telecommunication networks, although this list is not exhaustive. If the H2H is present, it has two principle states: active or inactive. If the H2H function is in the active state, the cumulative description of all the previously defined features including this one is a 'Data Swarm Hive Queen Worker'. If the H2H function is in the inactive state, the cumulative description of all the previously defined features excluding this one is a 'Data Hive Queen Worker' with a dormant H2H function.

A Communication Interface (CI) 31 may be a conduit entity to provide or facilitate direct interaction with the Locator Device 22 with the aid of user interface input/output devices. The communication interface may facilitate duplex communication between the user and the Locator device. If a communication interface present, it has two principle states: active or inactive. If the communication interface is in the active state, the cumulative description of all the previously defined features including this one is an 'Interactive Data Swarm Hive Queen Worker'. If the communication interface is in the inactive state, the cumulative description of all the previously defined features excluding this one is a 'Data Swarm Hive Queen Worker' with a dormant interactive function.

An exemplar Bee 40 is shown in Fig. 3. This Bee 40 has a locator device 22 and host 24 as parts thereof. Also included are the identity module 26, the data control function 27, the Q2B function 28, the Q2Q function 29, the H2H function 30, and the communication interface (CI) 31. For alternative purposes to be described below, various sensors 50-55 may be included as well as other hardware and/or functionalities.

There may be one or more methods for assessing the location of any one or more Bees. In various embodiments, each Bee may use several measurement methods in parallel. Where it is not possible to acquire or execute a particular method, then the calculations may be made based on the data that is available from the functioning methods. Some of the available methods include those listed below. Here also, this list is not exhaustive.

A first method may include triangulation from a Global positioning System (GPS) (see sensor 51 e.g., Fig. 3), existing telecommunication infrastructures and/or explicitly identified landmarks. The use of the Global positioning System (GPS) and other telecommunication infrastructures can give a basic geographic location reading. However, these results can have a significant margin of error. There may also be situations where precise geographical information is accessible with reference to specific landmarks. In such an instance, this information can be input into the virtual content generator system as fixed points of reference. This would contribute to a significant reduction in the margin of error in general. Each Bee may also be able to access a standardised date/time reference from these systems.

A second method may include the use of measurements of roll, pitch, and/or yaw using integrated measurement methods and apparatus (see sensors 52, 53 and 54, Fig. 3).

A third method may involve the direct measurement of the distance between two or more Bees using direct measurement methods and apparatus (see sensor 55).

A fourth method may involve Error Reduction (see functionality 56 in Fig. 3) by cross-reference of multiple Bees. This fourth method using an error reduction procedure is intended to reduce the margin of error of the calculated position of each Bee. The computational procedure may be based on a combination of the results from some or all of the first three levels/methods. Bees may be strategically attached to animate and inanimate entities within the environment. In order for coordinated interaction to occur within the augmented-reality environment, it is preferred that the Bees have a substantially precisely defined, spatial relationship to each other. If wireless communication means are used for facilitating data exchange between the bees, these may have a physical range limit. This limit may be influenced by various environmental factors. It will be preferred for each Bee to have an objective of establishing contact with other Bees that lie at both extremes of its physical range of communication. Further, it will also be preferred for each Bee to have the objective of having some, but not all, of its 'cross-reference' Bees in common with at least one other Bee. By fulfilling these objectives, a plurality of Bees that are within range of each other will create a matrix of cross-references that will facilitate a coherent and homogenised evaluation of the augmented-reality environment for all participating Bees.

The better spatial relationships to be evaluated will be for Bees that are close together. In this situation, both collision and interaction are most probable. This would then imply that as Bees move further apart, their spatial relationship to each other becomes less critical. The error reduction procedure will be optimised to focus resources on the more important spatial relationships.

A fifth method may involve Homogenisation: i.e., conforming disparate views of the augmented-reality environment. A plurality of Swarms may exist under the following circumstances; the distances between the Bees of a plurality of Hives is too far away from the Bees in a plurality of another group of Hives, then, one or more separate/discrete Swarms will have been explicitly defined. Different swarms may have different homogenised views of the augmented-reality environment. This is due to the fact that a high level of relative precision exists between the hives within each respective swarm. However in relation to the entire environment, the precision level of the swarms in relation to each other, possibly due to large distances, may be low. As swarms approach one another, there will come a point at which the two swarms will have the possibility to join together to form a single swarm entity. At this point it will be important to maintain visual and spatial integrity for any interactions that are taking place between the Bees and virtual objects or events. For this reason, if one or more of the Swarms is explicitly interacting with the augmented-reality environment, the virtual content generator system will conform the other homogenised views of the environment to the 'interacting' Swarm's view over a predefined period of time to allow a user to adjust to any aberrations.

Regardless the method or methods used, Locating and Routing Data can be important functions. Each Bee, see exemplar Bee 40 in Fig. 3, should be equipped with memory that will allow it to retain certain core function data on a temporary or permanent basis. This is listed as the first storage means 41 in FIG.3. This memory data can include a record of the bee's respective Identity Module. If it is a master Bee (minimum Worker, i.e., this includes Bees with features 1, 2 and 3 as a minimum as well as some or all of features 5, 6, and 7, e.g., Queens, see FIG.2), the memory data can also include the Identity Modules of the servant Bees (Drones and Pupa). If it is a servant Bee (this includes Bees with features 1 or 1 and 2 as a minimum and possibly feature 3, see FIG.2), the memory data can include a record of the number of its master Bee. Provision will also be made in the memory to store an alias that can be explicitly specified.

In order to have the best possible wireless communication (see functionality 60 in Fig. 3) between Bees, the quality of each Bee's wireless communication is assessed in real-time. The results of this real-time monitoring is received and stored by the master Bee for each Hive. Using this database of information as a basis, the master Bee will decide the most effective and reliable route to enable each Bee to acquire the relevant data from other Bees that are within physical range or are part of the same Hive.

A functional Bee can run in two possible states: roaming or fixed. If the Bee is in the roaming state it is able to decide which other Bees it will communicate with based on factors including; distance and quality of communication. If the Bee is in the fixed state, then the Bee will be explicitly allocated to be part of a specific Hive. In this situation, distance and quality of communication become secondary issues. Therefore alternative routes for communication become important for optimising overall performance. To achieve this objective, the master Bee will automatically choose the most economic route through the array of Bees. In terms of users within an AR environment, this could mean that in order to locate the wrist Bee of participant 'C', the system could choose to use the ankle Bee of participant 'A' (see Fig. 4C described below).

In many embodiments, a Bee will usually be in communication with other computer-based systems. To enable interaction between the Bees, Hives, Swarms and other external computer-based systems, the communication interface feature can be used to connect the Bee directly to one or more other computer-based systems. This connection may include the pertinent apparatus and methods to allow information from the Bee to be delivered to the external system in a compatible format.

In one or more embodiments hereof, the external computer-based system will host the virtual environment content generator that will have the task of receiving and processing all relevant data from the Bees, Hives and Swarms and translating it into a virtual model of all the real content within the environment and locating them in a coherent virtual model of said environment. This process can be made to occur in real-time and can therefore be seen as a form of motion-tracking. The virtual environment content generator can integrate the registered data about the real environment with CG events and objects that are generated by the virtual environment content generator. As a result, the users will be able to effectively interact with CG objects and events that, via their user interface, may be made to appear to be located within the real environment. The virtual environment content generator will be responsible for controlling and administering the flow of information between the virtual world and the real world.

Computer Generated-Augmented Reality (CG-AR) objects and characters may be made to populate the AR space. At a rudimentary level, these can be broken into two groups, inanimate and animate objects/characters. Inanimate objects may present the fewest problems due to the fact that there is no danger of them moving into and colliding with other CG objects, the only thing that needs to be updated is their relative position in relation to whatever the plurality of Bees are attached to. Animated objects or characters run the risk of colliding with each other as well as the users. In order to avoid this, the CG environment is built around a kernel that allows collision detection amongst all objects.

Described hereafter are details of Possible Implementations of some Preferred Embodiments of computer-generated augmented reality (CG-AR) according hereto.

A first preferred embodiment is in an AR Combat Game. As such, a game could be developed that takes place inside a large space, such as a warehouse. A team of users could then play with or against a CG-AR opposing team. FIG.4A provides an example, with the use of a block diagram, of a hierarchical relationships 70 between a plurality of Bees, here in a CG environment. The first Hive of Bees 71, positioned towards the bottom of the figure, is indicative of how a plurality of bees may be distributed amongst two users. The Hive 72, towards the top of the figure, indicates the hierarchical relationship between the Bees that will be secured to the virtual content generation (VCG) computer, a physical stage component and any other entities that might be recognised by the system.

FIG.4B is an example, with the use of a block diagram, of a relationship between the VCG computer 80, stage 81, and a Hive of Bees 82 that have bee strategically located on a user's body 84 in a manner such as that illustrated in FIG.4C. These illustrations also represent part of a scenario such as that presented in block diagram form in FIG.4A.

In more detail, FIG.4C provides an example of how to symbolically depict the placement of a plurality of Bees on a user 84. This scenario for the augmented-reality environment is presented in the block diagram form in FIG.4A. This implementation will preferably include a number of functionally different Bee types such as those that are depicted in the table 85 in FIG.4C. FIG.4D provides an example pictorially depicting eight users within an augmented-reality environment 88. This FIG.4D scenario for the augmented-reality environment is partially presented in the block diagram form in FIG.4A.

In this FIG.4 implementation, each user may have a Hive of Bees secured to strategic anatomical points on the user's body 84 such as; ankles, knees, pelvis, shoulders, elbows, and wrists as well as on any important hand-held devices in order to monitor the spatial position of the specified points in real-time. The most important of these bees will, via the CI, have an audiovisual user interface securely attached to it, which will be a head mounted display (HMD). Information pertaining to the position and orientation of the Bee that is secured to the HMD will be sent to the virtual content generator that will determine the user's view of the augmented-reality environment. Due to the fact that the controlling bee for each hive will also have the data control feature, this will enable it to be programmed to recognise specific virtual anatomical relationships between itself and the other bees within the hive. Each Bee, although it might not be able to use the information, will hold all the positional information of all the other bees within the hive.

The stage may include an environment 88 in which a plurality of large-scale blocks 89 is located. These blocks may form immovable features within the real environment. As a result, users will be forced to move around the blocks as they move from one place to another within the environment. Each block may also have one or more Bees permanently attached to it. It will be possible to input the location of these Bees as fixed points of reference (landmark) into the virtual content generation system. The blocks will form part of a set of high-precision landmarks for calculating the locations of the Bees or Hives.
When a user that is wearing a Hive of Bees enters the environment, the most appropriate stage block Bees that allow clear triangulation will register them. It will be an objective of the virtual content generation system to use fixed points of reference when possible. This will significantly reduce error. The choice of the best references will be assessed and updated in real-time. When necessary the stage block Bees used for locating a specific Bee will change and there will be a 'hand-over' from one Stage Block Bee to another.

In addition to the stationary blocks, there may also be a plurality of movable blocks. The blocks may be fitted with a remotely controlled transportation apparatus that, when activated, will allow the blocks to be moved by the virtual environment content generator system. This will allow the blocks to be reconfigured to create a different physical environment.

Binocular vision through the Head-mounted display (HMD) has the potential for true depth of field (DOF) for AR objects. The user is able to see the real environment through the display if a virtual AR object does not otherwise obscure it. The view of the real environment allows for binocular convergence on the object of interest. Since the CG-AR objects will also have optically correct placement for each eye, convergence will also function in a similar manner. This would then mean that a foreground AR object would appear to go out of focus as the user shifted their focus to an object in the background. This is an important feature for blending virtual and real environments together in a seamless fashion.

In order to make the illusion more complete, within the virtual content generation system, each Hive may have an associated virtual volume which would approximately be the size and shape of the user to which the Hive is attached. The purpose of the virtual volume is to act as a masking or occlusion object when a user or real object obscures another user's view of a CG-AR object. In its most simple form, it will be a cylindrical tube. The height of the tube would be defined by the floor-plane and the derived height above the floor-plane of the master Bee within the Hive. The most sophisticated solution would be a real-time human-shaped virtual volume with anatomically correct jointing based on the database of joint information held by the master Bee.

In a second generally preferred alternative embodiment, an Entertainment Console system could be developed that may be based on at least three bees. The first Bee would, via the CI, have an audiovisual user interface securely attached to it, which would usually be a head mounted display (HMD). The second Bee would, via the CI, have a hand-held device secured to it. The hand-held device would be used to input commands to the virtual content generation system in order to influence events occurring in the augmented-reality environment. The third would be located in the vicinity of where the viewer would like to view the content of the Entertainment system. With a minimum of three Bees the users would be tracked sufficiently to allow them to view a virtual content to be displayed within the vicinity of the third Bee.

FIG.5A is an example, with the use of a block diagram, of a hierarchical relationship between a plurality of Bees in a configuration 100 that could be used as an Entertainment Console. Fig. 5A indicates the hierarchical relationship between the Bees that will be secured to the virtual content generator (VCG) (that in this particular implementation is synonymous with an Entertainment Console) 101, a HMD 102 and a handheld control unit 103. FIG.5B pictorially depicts the structural and procedural relationship amongst the Hive of Bees 100 that are illustrated in FIG.5A; particularly involving the user 102/103 and the console 101.

FIG.5C pictorially depicts two users, named X 105, and Y 106, an Entertainment Console 101 and a handheld control unit 103 within an augmented-reality environment. This scenario for the augmented-reality environment is partially presented in the block diagram form in FIG.5A. This implementation may also use a number of functionally different Bee types that are depicted in the table 107 in FIG.5C.

FIG.5D pictorially depicts the view User-X has of User-Y 106 through his HMD within an augmented-reality environment. The display of the virtual content has not yet been activated by the handheld control. This scenario for the augmented-reality environment is partially presented in the block diagram form in FIG.4A. FIG.5E pictorially depicts the view of User-X of User-Y 106 through his HMD within an augmented-reality environment. The display of the virtual content 110 has been activated by the handheld control. This scenario for the augmented-reality environment is partially presented in the block diagram form in FIG.4A.

In this implementation (Figs. 5A - 5D), each user will preferably have a Hive consisting of one or more, but, as described here preferably at least three Bees. The master Bee may, as shown here, be integrated in the handheld control unit 103. One of the servant Bees may, via the communication interface (CI), have an audiovisual user interface securely attached to it, which may be a head mounted display (HMD) 102. The other servant Bee may be integrated into the Entertainment Console 101. Information pertaining to the position and orientation of the Bee secured to the HMD 102 will be sent to the VCG (virtual content generator) system that will determine the user's view of the augmented-reality environment. Note, one of the functions of the servant Bee integrated into the Entertainment Console will often be acting as a reference point for the VCG system that is also integrated into the Entertainment Console.

Listed here are examples of alternative virtual content applications/scenarios (this list is not exhaustive): 3D video games (with options for multiple users); 3D television (with options for multiple users and/or an option for multiple channels being viewed simultaneously by different users); 3D computer screen (with option for enhanced environment for CAD modelling and computer games); 3D instructional information for assembly purposes (to e.g., reduce the learning curve for new procedures in a factory environment); 3D personal or group museum guide (wherein individuals could have their own personal guides show them around or with an option for multiple users; groups could choose to synchronise their HMDs so that they could all view the same guide simultaneously; with one benefit being a reduced impact and disturbance of other visitors who are not part of the group or do not wish to have a guide); and/or 3D navigation system for firefighters or like rescue or team personnel (with an option for multiple users and an option for up to 100% virtual content in poor visibility; in any case for providing navigation information that allows the user to perform their job in, otherwise, impossible or otherwise very difficult conditions, as for example, if a fire-fighter were in a building that was either very dark or filled with smoke, this system could be used to navigate the fire-fighters through the space).

Another example of CG-AR according hereto includes a Positional Guidance System which will be described primarily in relation to Figs 6A-6F. Maintaining a precise spatial relationship between a plurality of specified points is a situation that often presents many problems. By securing Bees to the entities that require positional monitoring, real-time data pertaining to each Bee's relative positions can be acquired. Via the CI, the Bees will communicate this data to the VCG. The measured relative positions of the Bees will then be compared to the reference optimal relative positions that are defined within the virtual model. Corrective instructions can then be communicated to the relevant positional control systems in order to maintain the optimal specified spatial relationship.

FIG.6A provides an example, by block diagram 200, of a hierarchical relationship between a plurality of Bees in a positional guidance system. Fig 6A indicates the relationship in a hive structure 201 between the Bees that can respectively be secured to the lead transport unit 202 and the follow transport units 203 in accordance herewith. Similarly, FIG.6B provides an example of the structural and procedural relationship between the lead transport unit 202 and the follow transport units 203.

FIG.6C pictorially depicts the placement of a plurality of respective Bees 204 on each of a lead transport unit 202 and four follow transport units 203. This scenario for an augmented-reality environment 205 may involve a number of functionally different Bee types such as those which are depicted in the table 207 in FIG.6C.

FIG.6D pictorially depicts the first in a series of three consecutive images (see Figs. 6E and 6F following) of a lead transport unit 202 and four follow transport units 203 in motion within an augmented-reality environment hereof. FIG.6E depicts the second in the series of three images and FIG.6F depicts the third in the series. In this embodiment of a Virtual Content Scenario, the moving array of vehicles 202/203 the vehicles may be remotely controlled using the system hereof. In particular, after comparing the measured positions of the Bees with a virtual model, the virtual content generation system may then generate pertinent information regarding what measures need to be implemented in order to move the Bees to positions that are consistent with the virtual model (see the modification of trail unit 203a in the progression from Fig. 6E to 6F). This information may, via the CI, be communicated to a transportation system that has the ability to alter the geographic positions of the respective entities to which the Bees are secured. The procedure may run as a real-time feedback loop. The outcome can also be an integrated system that constantly keeps a plurality of entities in a specific spatial configuration.

A particular use for such an embodiment may be in Architectural and Civil Engineering projects which are producing larger and larger components that need to be transported long distances buy land, air, and sea. A matrix of remotely controlled vehicles can be used to carry these future superstructures.

Similarly, Architectural and Civil Engineering projects may make use hereof in a Structural Monitoring System. In particular, during the functional lifetimes of such projects, the structures hereof may benefit from constant or substantially constant monitoring for physical deterioration or faults. A matrix of Bees strategically placed throughout the structure can be used to monitor unexpected structural changes that could be cause environmental factors such as wind, land subsidence, and earthquakes. After comparing the measured positions of the Bees with the virtual model, the virtual content generation system may then generate pertinent information regarding the differences that exist between the measured positions of the virtual model. This information may then, via the CI, be communicated to a transportation system that has the ability to alter the geographic positions of the respective entities to which the Bees are secured. The procedure can run as a real-time feedback loop. The outcome can be an integrated system that constantly keeps a plurality of entities in a specific spatial configuration.

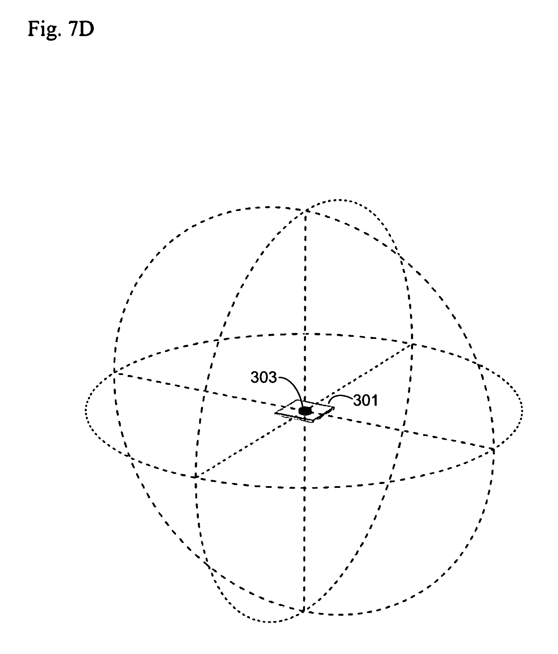

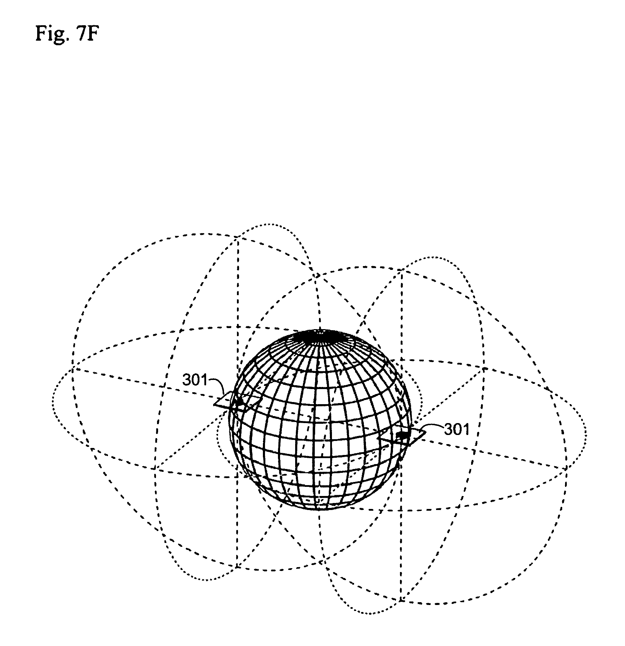

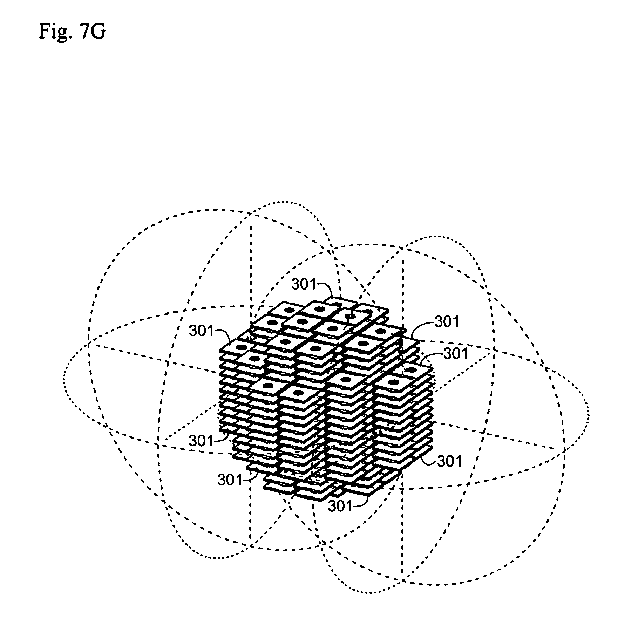

In one further example of a usage hereof, a Matrix or Grid Computer array can be created. Here, each Bee can have the ability to wirelessly communicate with other Bees over a limited distance. In order to illustrate the idea (this example is shown in Figs.7A-7G), it will be assumed that the maximum communication distance for a typical Bee would geometrically describe a sphere around the unit, see e.g., FIG.7D. This would then suggest that the maximal capacity of a Matrix computer array is a function of the physical size of an individual Bee and spatial configuration of the plurality of Bees. This would then suggest that organising the bees into a configuration that maximises volume in relation to surface area will give the maximum number of Bees within the minimal volumetric envelope, see FIG.7F and FIG.7G. As technology improves and the individual Bees become smaller, the maximum number of Bees per swarm will increase giving greater processing power.

FIG.7A illustrates, by block diagram, a hierarchical relationship 300 between a plurality of Bees, and particularly those between an external computer-based system 302 and the matrix grid unit 301 including the Bees 303 that will be used to build a Matrix/Grid computer. FIG.7B illustrates, by block diagram, the structural and procedural relationship between an external computer-based system 302 and the two Bee types 303 that build the Matrix/Grid computer. FIG.7C pictorially depicts an exemplar Matrix/Grid unit 301 with a Bee 303. This implementation may include a number of functionally different Bees types that are depicted in the table 307 in FIG.7C.

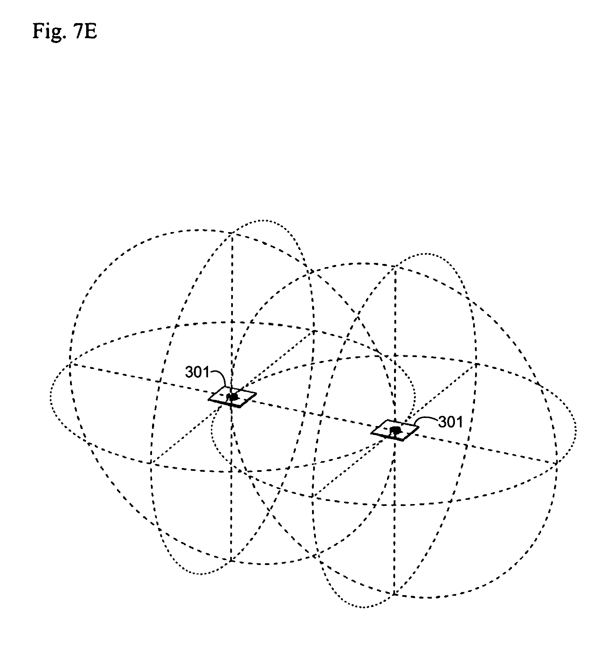

FIG.7D pictorially depicts the maximum communication distance for a typical Bee 303 as a sphere around the unit 301. FIG.7E pictorially depicts the intersection of two Matrix/Grid Units 301 maximum communication ranges unit. FIG.7F pictorially depicts the optimal volume of an array of Matrix/Grid units 301. FIG.7G pictorially depicts an array of Matrix/Grid units 301 that occupy the optimal volume of an array of Matrix/Grid units 301.

In a first of two Virtual Content Scenarios here, a Grid Computer may be formed hereby. Linking a Bee to a PDA type of device, there can be an opportunity to make use of these devices in areas where users congregate. For example, the passengers on a metro train are in close proximity and there already exists various forms of wireless communication systems within Metro Train Networks. An organisation such as SETI (Search for Extraterrestrial Intelligence) uses distributed computing to analyse their data. Since Bees have the possibility of carrying the Identity Module component, it will be possible for the SETI computer system to, via the CI, logon to a Bee that in turn could, via the CI, use the PDA's spare processor cycles. If the Bee is registered to a specific owner with the necessary bank account details, payments can be made to the owner by direct monetary transfer for the use of their processing time.

In a second example, a Matrix Computer can be formed hereby. To build further on the SETI scenario, if a plurality of Bees are configured into a fixed Hive or Swarm, The Hive/Swarm has the ability to attempt to find the optimal way to use the combined resources of the Hive/Swarm to solve the tasks that have been allocated to the individual Bees. This overall optimisation can be seen as a type of Matrix Computer configuration.

Thus herein described are apparatuses and/or methods and/or a combination of one or more apparatuses and methods for generating augmented-reality environments with support for one or multiple users.

In an embodiment of the present invention, an apparatus hereof includes:
a communication interface means (CI) for communicating the combined output of the apparatus to the user in a form that can be experienced by one or more of the five senses of smell, taste, hearing, touch or sight.
One or more instances of a Beacon process means for generating information pertaining to the location of specified points within the environment, and retrieving or generating data of time, geographic position, roll, yaw and pitch; at least one instance of the Beacon process means can be directly connected to at least one instance of a CI means in such a manner that they maintain the same relative position;
an error reduction means for minimising the margin of error that is inherent in the required measurement procedures;
a first storage means for storing the retrieved or generated data, that has been refined using the error reduction means, pertaining to said specified points within the environment;
a tracking process means for retrieving information pertaining to the specific location of the pertinent user sensory organs through which they will experience the combined output of the apparatus via the CI means;
a second storage means for storing the data pertaining to the location of the pertinent user sensory organs;
a virtual environment content generation means who's attributes such as size, position, orientation are based on data retrieved from said first and second storage means, and generating data streams that are respectively specific to the plurality of user sensory organs that experience the augmented-reality environment via their respective CI means;
a third storage means for receiving and storing the generated data streams and building a database of the geographic position, roll, yaw and pitch of the plurality of CI means in relation to said data;
a wireless data communication means for sending and receiving information that is generated or is to be used by an embodiment of a method or apparatus in accordance with the present invention.
a combining means for blending the virtual environment content with the user's perceived experience of the real environment by making use of certain components from the databases held within the first, second and third storage means to create an augmented-reality that is output to the CI;
a user interface means for receiving and communicating the output from the CI means and presenting it to the user in a format compatible with their pertinent sensory organs is such a manner that said user experiences the augmented-reality environment in accordance with the present invention.

## Claims

1. A system for generating augmented-reality environment with support for one or multiple users, the system comprising:
one or more programmable interactive devices, such devices each being programmable to have one or more characteristics within a pre-defined hierarchy of interactive characteristics; and
a virtual content generator;
whereby the one or more programmable interactive devices each have a location ability for determining the respective spatial positioning of the respective programmable interactive device and a communication ability for communicating the respective spatial position to one or both of the virtual content generator and the respective programmable interactive devices.

2. A system according to claim 1 wherein the one or more programmable interactive devices include a plurality of programmable interactive devices and wherein each of the plurality of programmable interactive devices is adapted to communicate respective spatial positioning with at least one other of the plurality of programmable interactive devices.

3. A system according to claim 2 wherein at least one of the programmable interactive devices has enhanced location ability which makes use of respective spatial positioning communicated thereto by one or more of the plurality of programmable interactive devices.

4. A system according to any of claims 1, 2 or 3 wherein the hierarchy of characteristics includes a minimal location ability, a monitor and transmitter ability, an identification and transceiver ability and a command control ability.

5. A system according to claim 4 wherein the hierarchy is a Bee structure wherein the minimal location ability is a Pupa characteristic, the monitor and transmitter ability is a Drone characteristic, the identification and transceiver ability is a Worker characteristic and the command control ability is a Queen Bee characteristic.

6. A system according to claim 1-5 wherein the hierarchy of characteristics also include a data control ability, and a system interface ability.

7. A system according to claim 6 wherein the hierarchy of characteristics also include a data control ability is a Data-control function characteristic, and a system interface ability is a communication interface characteristic.

8. A system according to any of claims 1-7 wherein the programmable interactive devices perform as one or both of a hive or a swarm.

9. A system according to any of claims 1-8 wherein the location ability includes a plurality of methods for assessing the location of any one or more programmable interactive devices, the methods being operable in one of in series or in parallel.

10. A system according to either of claims 1 or 9 wherein the method for assessing location includes: triangulation from global positioning system; sensor measurements of roll, pitch and/or yaw; direct measurement; error reduction and homogenisation.

11. A system according to any of claims 1-10 wherein the one or more programmable interactive devices are disposable on a user's body, or any other animate object.

12. A system according to any of claims 1-11 wherein the one or more programmable interactive devices are disposable on respective inanimate objects.

13. A system according to any of claims 1-12 wherein one of the one or more programmable interactive devices is disposable in/on an entertainment console.

14. A system according to any of claims 1-13 wherein the one or more programmable interactive devices is disposable in/on transport units.

15. A system according to any of claims 1-14 wherein one or more programmable interactive devices is disposable in/on computer matrix/grid systems.

16. A system according to any of claims 1-15 wherein the one or more programmable interactive devices are disposable on/in a remote control unit.

17. A system according to any of claims 1-16 wherein the one or more programmable interactive devices are disposable on/in a head mounted display (HMD) or any other man-machine-interface device.
